Europäisches Patentamt

European Patent Office

Office européen des brevets

(11) Veröffentlichungsnummer : **0 034 262**
B1

# (12) EUROPÄISCHE PATENTSCHRIFT

(45) Veröffentlichungstag der Patentschrift :
30.03.83

(51) Int. Cl.³ : **B 01 D 25/12**

(21) Anmeldenummer : 81100402.7

(22) Anmeldetag : 21.01.81

(54) **Plattenfilterpresse mit Anschlagleisten zur Plattenführung.**

(30) Priorität : 30.01.80 DE 8002233 U

(43) Veröffentlichungstag der Anmeldung :
26.08.81 Patentblatt 81/34

(45) Bekanntmachung des Hinweises auf die Patenterteilung : 30.03.83 Patentblatt 83/13

(84) Benannte Vertragsstaaten :
AT BE CH DE FR GB IT LI NL SE

(56) Entgegenhaltungen :
DE A 2 618 437
DE A 2 645 964
DE A 2 824 625
DE B 1 288 073
DE C 1 008 711
DE C 1 144 689

(73) Patentinhaber : **Rittershaus & Blecher GmbH**
**Wittensteinstrasse 80-100**
**D-5600 Wuppertal 2 (DE)**

(72) Erfinder : **Rademacher, Karl August**
**Hatzfelder Strasse 33**
**D-5600 Wuppertal 2 (DE)**
Erfinder : **Oelbermann, Max**
**Max-von Laue-Strasse 3**
**D-5630 Remscheid 11 (DE)**

(74) Vertreter : **Peerbooms, Rudolf, Dipl.-Phys.**
**Postfach 200 208 Dickmannstrasse 45C**
**D-5600 Wuppertal 2 (DE)**

## Plattenfilterpresse mit Anschlagleisten zur Plattenführung

Die Erfindung betrifft eine Plattenfilterpresse mit an Führungsträgern aufgehängten Filterplatten, die zwecks Verhinderung von Pendelbewegungen längs Anschlagleisten geführt sind.

Größere Plattenfilterpressen besitzen Führungsstangen oder Anschlagleisten zur Begrenzung der Pendelbewegung der Filterplatten beim Auseinanderfahren des Filterplattenpaketes. Diese bekannten Führungselemente stellen jedoch, auch wenn sie als Anschlagleisten ausgelegt sind, noch eine erhebliche Erschwerung der mit dem Auswechseln eines Filtertuches oder einer Filterplatte verbundenen Arbeiten dar.

Der Erfindung liegt die Aufgabe zugrunde, den Pendelschutz der Filterplatten so auszugestalten, daß ein erforderlicher Filterplattenaustausch oder Filtertuchaustausch ohne Demontage des Pendelschutzes vorgenommen werden kann.

Die Lösung dieser Aufgabe wird erfindungsgemäß dadurch erreicht, daß die Anschlagleisten von den Filterplatten wegverstellbar sind. Vorzugsweise sieht die Erfindung hierbei vor, daß die Anschlagleisten um zur Längsachse der Filterpresse parallele Achsen verschwenkbar sind. Durch diese Maßnahmen ist es nunmehr möglich, bei einem erforderlichen Filterplattenaustausch oder dgl. mit einfachsten Handgriffen die Pendelschutz-Anschlagleisten so weit von den Filterplatten betriebsmäßig wegzuverstellen, daß die Plattenlaufrollen oder -gleitstücke beispielsweise aus ihren Schienen herausgehoben werden können oder auch bei noch hängender Platte ein Filtertuchaustausch vorgenommen werden kann.

Bei größeren Plattenfilterpressen kann der Erfindung zufolge vorgesehen werden, daß jede Anschlagleiste in für sich verschwenkbare Einzelabschnitte unterteilt ist.

Gemäß einer Ausführungsart kann der Erfindung zufolge vorgesehen werden, daß die Anschlagleisten an dem oberen Führungsträger gelagert und gegen die obere Schmalseite der Platte oder gegen die schmalen Außenseiten der Filterplatten anstellbar sind. In spezieller Ausbildung kann hierbei vorgesehen werden, daß die Führungsträger mit nach unten und die Anschlagleisten mit nach oben gerichteten Lagerplatten versehen sind, welche durch eine schwenkbare Achse aneinander angelenkt und durch in Arretierlöcher steckbare Bolzen in Arbeitsstellung oder zurückgezogener Stellung arretierbar sind. Diese Ausführungsform zeichnet sich durch eine sehr bequeme Bedienbarkeit bei gleichzeitig preiswerter Herstellbarkeit aus.

Gemäß einer alternativen Ausführungsform kann der Erfindung zufolge vorgesehen werden, daß die Anschlagleisten an den unteren Eckbereichen der Filterplatten angeordnet sind. Hierbei sind sie zweckmäßigerweise auf den unteren Zugstreben der Filterpressen schwenkbar gelagert, da so die ohnehin bei größeren Filterpressen vorhandenen Zugstreben als Schwenkachse ausgenutzt werden können. Vorteilhafterweise bestehen hierbei die Anschlagleisten aus einem L-Profilblech, in dessen Winkelraum die Zugstreben umschließende Lagerbuchsen befestigt sind und die mit ihrem längeren, durch Rippen verstärkten Schenkel gegen die schmalen Außenseiten der Filterplatte anstellbar sind.

Die der Neuerung zufolge vorgesehene Verschwenkbarkeit der Anschlagleisten erweist sich als besonders vorteilhaft bei Plattenfilterpressen mit einer rahmenförmigen, über das Filterplattenpaket hinweg verfahrbaren Plattenabspritzeinrichtung. In diesem Falle können die Anschlagleisten einerseits an dem unteren Endbereich der Filterplatten angeordnet werden, was im Hinblick auf ihre Führungsaufgabe wegen der Ferne zur Filterplattenaufhängung von besonderem Vorteil ist, andererseits kann aber durch Wegschwenken der Anschlagleisten in eine niedergeschwenkte Stellung Raum für eine freie Durchfahrt der Abspritzeinrichtung freigegeben werden. Hierbei ist zweckmäßigerweise der Rahmen der Abspritzeinrichtung mit Anschlägen zur Verhinderung der Pendelbewegung einer gerade abzuspritzenden Platte versehen.

Nach weiteren Merkmalen der Erfindung kann vorgesehen werden, daß die Anschlagleisten über die Zugstreben hinaus zu Abdeckplatten für Bunkeröffnungen verlängert sind, welche in der liegenden Stellung sich überlappen und in der Arbeitsstellung der Anschlagleisten nach oben hin nach Art von Trichterwänden divergieren. Diese zu Abdeckplatten verlängerten Anschlagleisten dienen bei einem normalen Betrieb der Plattenfilterpresse einerseits zur Führung der Filterplatten und andrerseits als Leitbleche beim Auswurf des Filterkuchens in einen unterhalb der Filterpresse angeordneten Bunker. Beim Waschen der Filterplatten dienen die verlängerten Anschlagleisten als Spritzwasserauffang und Abdeckung der Bunkeröffnung. Zweckmäßigerweise ist hierbei die überlappte Abdeckplatte an ihrem unteren Rand mit einer Wasserableitrinne versehen.

Die Erfindung wird im folgenden anhand mehrerer in der Zeichnung dargestellter Ausführungsbeispiele näher beschrieben. In der Zeichnung zeigen:

Figur 1 eine Filterpresse in Seitenansicht mit an der Oberseite der Filterplatte angeordneten Pendelschutz-Anschlagleisten

Figur 2 einen Teilquerschnitt durch die Filterpresse nach Figur 1,

Figur 3 einen Schnitt gemäß der Linie III-III in Figur 2,

Figur 4 in Seitenansicht eine zweite Ausführungsform einer Filterpresse mit im unteren Bereich der Filterplatten angeordneten Pendelschutz-Anschlagleisten,

Figur 5 ein Detail-Querschnitt durch die Filterpresse nach Figur 4,

Figur 6 in einer Detaildarstellung die Anschlagleisten in Anstellung an das Filterplattenpaket,

Figur 7 in einer Detaildarstellung ein drittes Ausführungsbeispiel der Filterpresse, bei welcher die Anschlagleisten in zurückgezogener Lage gezeigt sind, und

Figur 8 die Filterpresse nach Figur 7 bei an das Filterplattenpaker angestellten Anschlagleisten.

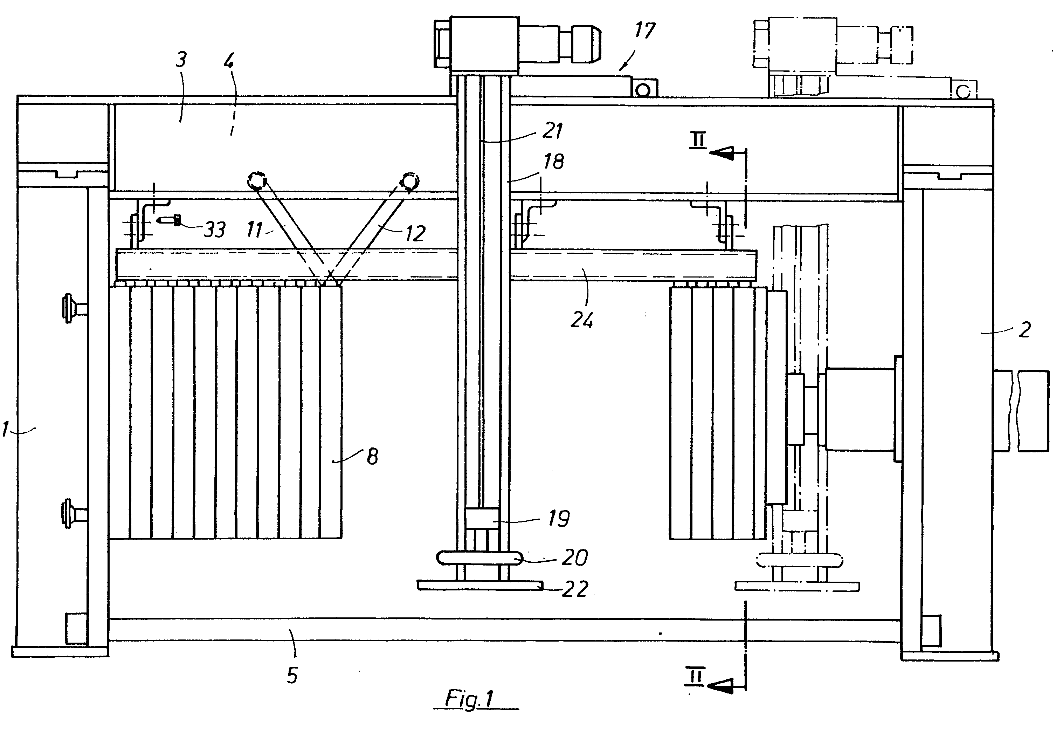

Die Fig. 1 bis 3 zeigen eine Plattenfilterpresse mit zwei vertikalen Ständern 1, 2, auf denen zwei im Abstand voneinander angeordnete, parallele I-Führungsträger 3, 4 aufliegen und die bodenseitig durch zwei parallele Zugstreben 5 miteinander verbunden sind. An den unteren, inneren Flanschen 6, 7 der beiden I-Führungsträger 3, 4 sind eine Vielzahl von Filterplatten 8 verschiebbar aufgehängt. Die Filterplatten weisen an ihrer oberen Schmalseite 9 eine zentrale Aufhängung 10 mit in entgegengesetzter Richtung abgewinkelten Tragarmen 11, 12 auf. An den freien Enden der Tragarme 11, 12 sind Laufrollen oder Gleitstücke 13, 14 angeordnet, die sich über Schienen 15, 16 auf den I-Flanschen 6, 7 abstützen.

An den oberen Flanschen der I-Führungsträger 3, 4 ist eine Plattenabspritzeinrichtung 17 verfahrbar gelagert. Die Abspritzeinrichtung 17 besitzt einen rechteckigen Tragrahmen, welcher die beiden Führungsträger 3, 4 und die Filterplatten 8 umschließt. Seine Seitenholme 18 besitzen ein nach außen hin offenes C-Profil und in ihnen sind Halterungen 19 für ein auf- und abbewegbares Spritzrohr 20 geführt. Das Spritzrohr 20 besitzt zwei, eine zu reinigende Filterplatte 8 zwischen sich einfassende Zweigleitungen, die mit gegeneinander gerichteten Spritzdüsen versehen sind, so daß eine zu reinigende Filterplatte an ihren beiden Hauptflächen gleichzeitig abgespritzt wird. Die als Gewichte ausgebildeten Halterungen 19 hängen jeweils an Seilen 21, die zum Hochfahren des Spritzrohres 20 aufgewickelt werden. Der untere Querholm des Rechteckrahmens der Abspritzeinrichtung wird von einer Auffangwanne 22 gebildet.

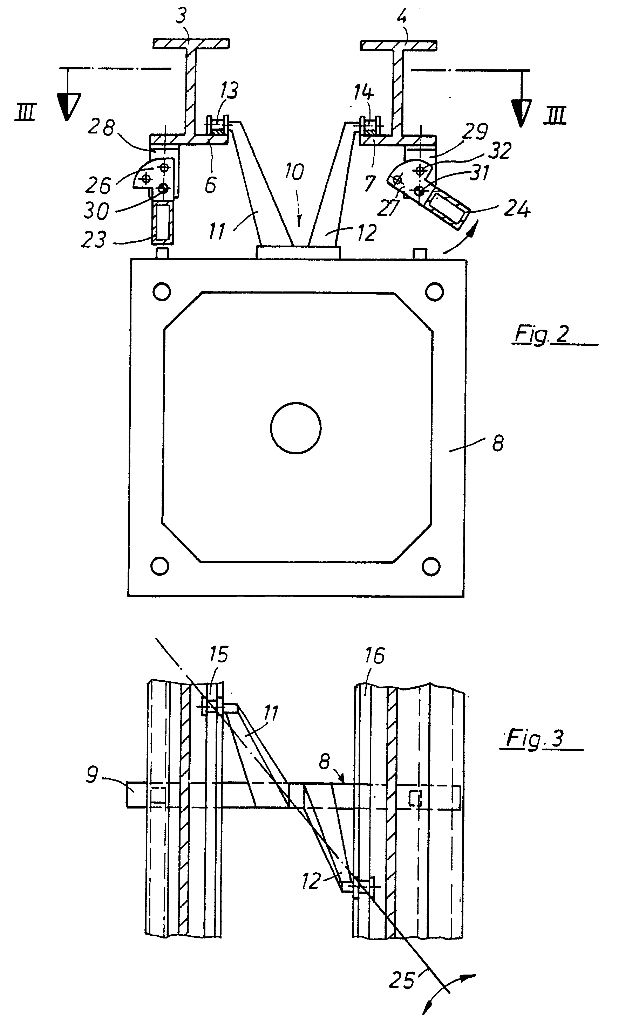

Die Filterplatten sind an ihrer oberen Schmalseite normalerweise an Anschlagleisten 23, 24 geführt, die ein Pendeln um die in Fig. 3 strichpunktiert angedeutete Achse 25 verhindern, zum Wechseln einer Filterplatte können die Anschlagleisten 23, 24 jedoch von den Filterplatten 8 weggeschwenkt werden, wie in den Fig. 2 und 3 jeweils auf der rechten Seite veranschaulicht ist. Die als Rechteckrohre ausgebildeten Anschlagleisten 23, 24 sind an ihrer oberen Schmalseite mit Lagerplatten 26, 27 versehen, die an nach unten gerichteten Lagerplatten 28, 29 der Führungsträger 3, 4 anliegen. Die Lagerplatten sind jeweils paarweise durch eine Schwenklagerachse 30, 31 aneinander angelenkt und durch in Arretierlöcher 32 steckbare Bolzen 33 in Arbeitsstellung (Fig. 2 links) bzw. in zurückgezogener Stellung (Fig. 2 rechts) arretierbar. In der zurückgezogenen Stellung nach Fig. 2, rechts, verbleibt die Anschlagleiste 24 jedoch noch fast ganz in der vertikalen Fluchtung der Filterplatte, so daß die rahmenförmige Abspritzeinrichtung 17 auch bei hochgeschwenkten Anschlagleisten 23, 24 noch längs des Filterplattenpaketes verfahren werden kann.

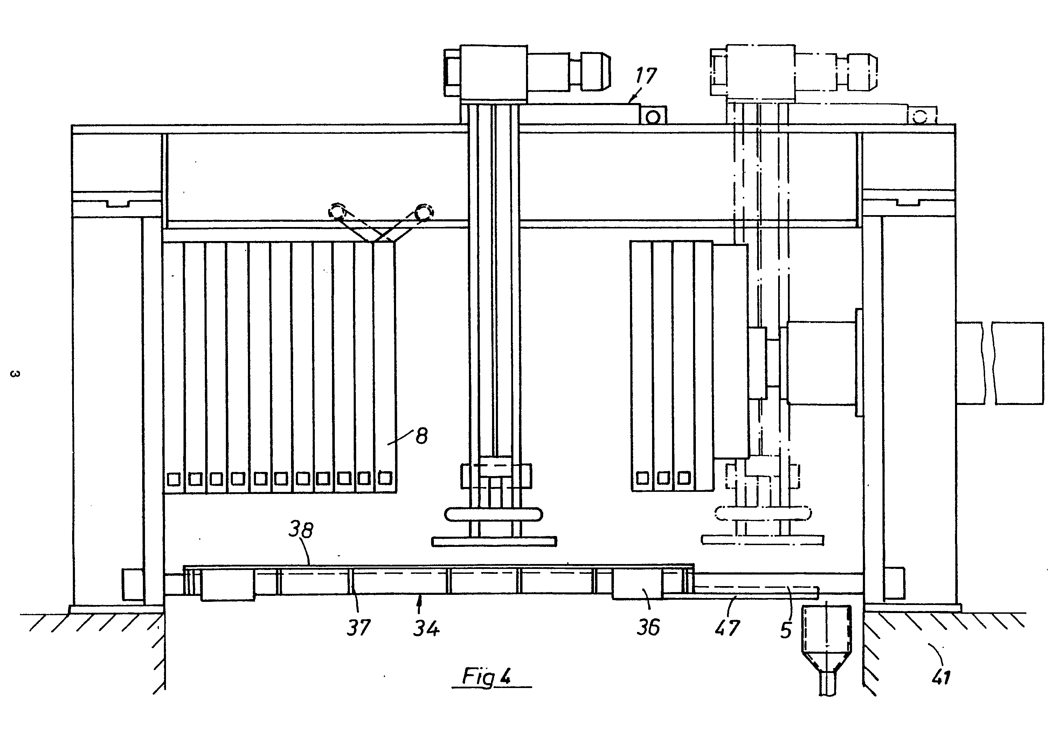

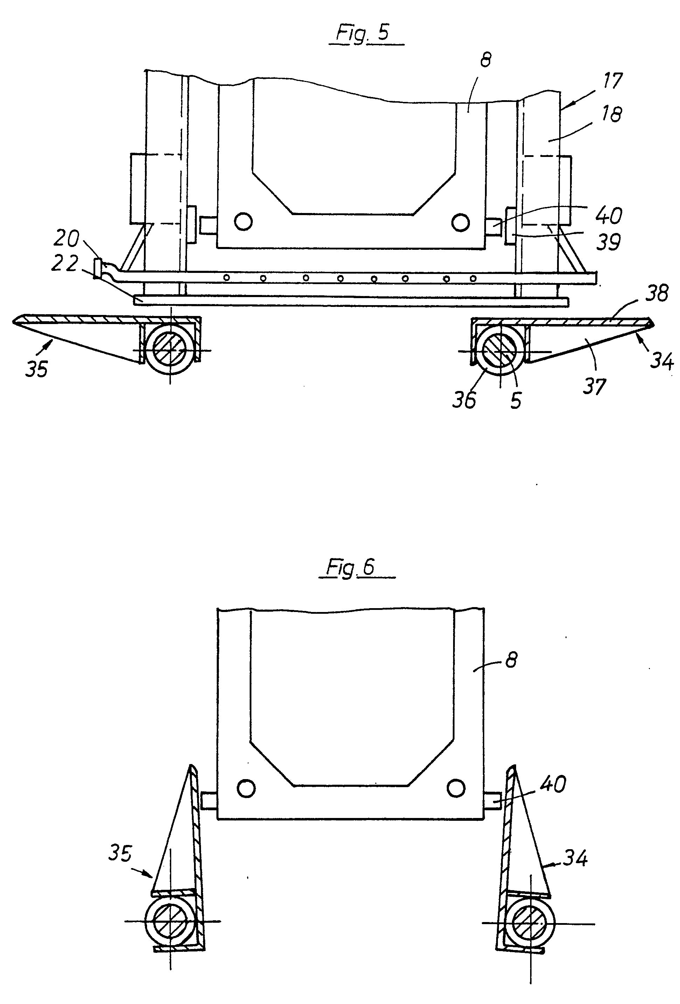

Bei dem Ausführungsbeispiel nach den Fig. 4, 5 und 6 sind im Unterschied gegenüber dem zuvor beschriebenen Ausführungsbeispiel die Pendelschutz-Anschlagleisten 34, 35 an den unteren Eckbereichen der Filterplatten 8 angeordnet und jeweils auf den unteren Zugstreben 5 schwenkbar gelagert. Die Anschlagleisten bestehen aus einem L-Profilblech, in dessen Winkelraum die Zugstreben umschließende Lagerbuchsen 36 befestigt sind und die mit ihrem längeren durch Rippen 37 verstärkten Schenkel 38 gegen die schmalen Außenseiten der Filterplatten 8 anstellbar sind (vergl. Fig. 5).

In der niedergeschwenkten Stellung nach den Fig. 4 und 5 liegen die Anschlagleisten 34, 35 in einem solch weiten Abstand von den Filterplatten 8, daß die rahmenförmige Abspritzeinrichtung 17 mit ihrer unteren Wanne 22 und dem in unterer Stellung befindlichen Spritzrohr 20 frei zwischen Filterplattenpaket und Anschlagleisten verfahren werden kann. An den beiden Seitenteilen trägt die rahmenförmige Abspritzvorrichtung jeweils kurze Anschlagstücke 39, die auf Gegenanschläge 40 an den Filterplattenschmalseiten ausgerichtet sind und die jeweils in Abspritzstellung befindliche Filterplatten gegen ein Pendeln schützen.

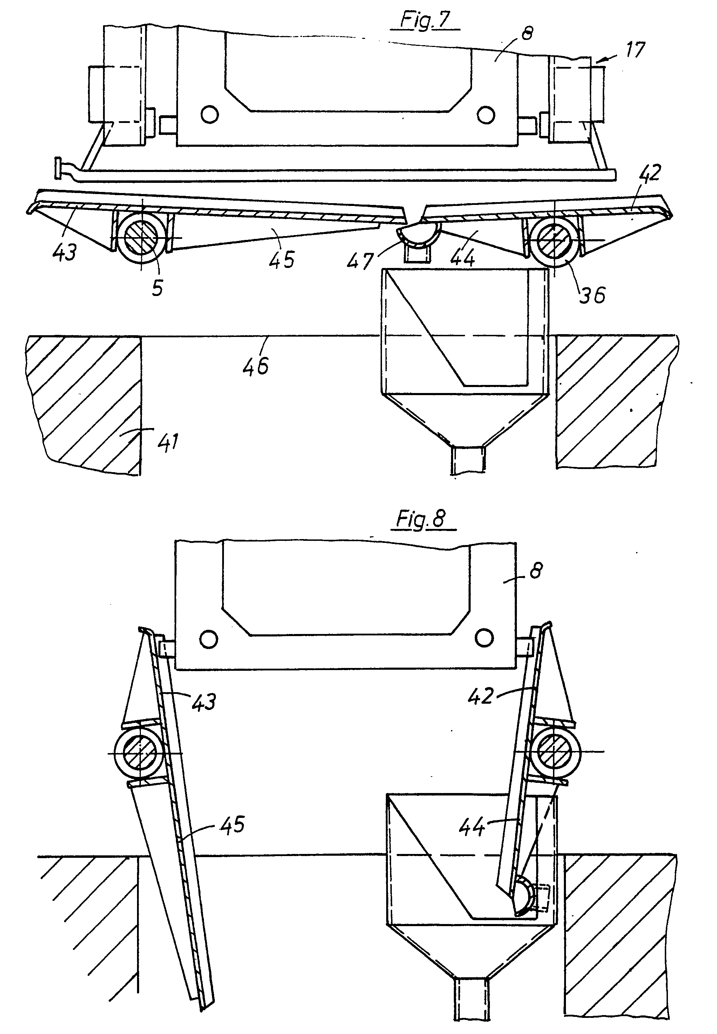

Die Fig. 7 und 8 veranschaulichen eine sehr zweckmäßige Weiterentwicklung der Filterpresse nach dem Ausführungsbeispiel der Fig. 4 bis 6. Die Filterpresse ist in den Fig. 7 und 8 oberhalb eines Bunkers 41 zur Aufnahme des Filterkuchens angeordnet. Bei einer solchen Aufstellung der Filterpresse muß beim Abspritzen einer Filterplatte das Spritzwasser aufgefangen und abgeleitet werden. Beim Ausführungsbeispiel nach den Fig. 7 und 8 sind die Anschlagleisten 42, 43 über die Zugstreben 5 hinaus zu Abdeckplatten 44, 45 für die Bunkeröffnung 46 verlängert. Die Abdeckplatten überlappen sich in der liegenden Stellung, wobei die überlappte Abdeckplatte 44 an ihrem unteren Rand mit einer Wasserableitrinne 47 versehen ist.

In der normalen Arbeitsstellung nach Fig. 8 sind die Anschlagleisten 42, 43 hochgeschwenkt und liegen als Pendelschutz an den Gegenanschlägen 40 der Filterplatten 8 an. Die Anschlagleisten 42, 43 stellen zusammen mit den Abdeckplatten 44, 45 in die Bunkeröffnung 46 hineinragende Trichterwände dar, die den Filterkuchenauswurf auf die Bunkeröffnung hin zentrieren.

Die Erfindung ist nicht auf die dargestellten Ausführungsbeispiele beschränkt. Bei großen Filterpressen ist es immer von Vorteil, die Anschlagleisten in für sich verschwenkbare Einzelabschnitte zu unterteilen, um so die erforderliche Verstellkraft gering zu halten.

**Ansprüche**

1. Plattenfilterpresse mit an Führungsträgern aufgehängten Filterplatten, die zwecks Verhinderung von Pendelbewegungen längs Anschlagleisten geführt sind, dadurch gekennzeichnet, daß die Anschlagleisten (23, 24 ; 34, 35 ; 42, 43) von den Filterplatten (8) wegverstellbar sind.

2. Plattenfilterpresse nach Anspruch 1, dadurch gekennzeichnet, daß die Anschlagleisten (23, 24 ; 34, 35 ; 42, 43) um zur Längsachse der Filterpresse parallele Achsen (30, 31 ; Zugstreben 5) verschwenkbar sind.

3. Plattenfilterpresse nach den Ansprüchen 1 und 2, dadurch gekennzeichnet, daß jede Anschlagleiste in für sich verschwenkbare Abschnitte unterteilt ist.

4. Plattenfilterpresse nach einem der Ansprüche 1, 2 oder 3, dadurch gekennzeichnet, daß die Anschlagleisten (23, 24) an den oberen Führungsträgern (3, 4) gelagert und gegen die obere Schmalseite (9) oder gegen die schmalen Außenseiten der Filterplatten (8) anstellbar sind.

5. Plattenfilterpresse nach Anspruch 4, dadurch gekennzeichnet, daß die Führungsträger (3, 4) mit nach unten und die Anschlagleisten (23, 24) mit nach oben gerichteten Lagerplatten (26, 27, 28, 29) versehen sind, welche durch eine Schwenklagerachse (30, 31) aneinander angelenkt und durch in Arretierlöcher (32) steckbare Bolzen (33) in Arbeitsstellung bzw. in zurückgezogener Stellung arretierbar sind.

6. Plattenfilterpresse nach einem der Ansprüche 1 bis 3, dadurch gekennzeichnet, daß die Anschlagleisten (34, 35 ; 42, 43) an den unteren Eckbereichen der Filterplatten (8) angeordnet sind.

7. Plattenfilterpresse nach Anspruch 6, dadurch gekennzeichnet, daß die Anschlagleisten (34, 35 ; 42, 43) auf unteren Zugstreben (5) der Filterpresse schwenkbar gelagert sind.

8. Plattenfilterpresse nach Anspruch 7, dadurch gekennzeichnet, daß die Anschlagleisten (34, 35 ; 42, 43) aus einem L-Profilblech bestehen, in dessen Winkelraum die Zugstreben (5) umschließende Lagerbuchsen (36) befestigt sind und die mit ihrem längeren, durch Rippen (37) verstärkten Schenkel (38) gegen die schmalen Außenseiten der Filterplatten (8) anstellbar sind.

9. Plattenfilterpresse nach einem der Ansprüche 6, 7 oder 8, mit einer rahmenförmigen, über das Filterplattenpaket verfahrbaren Plattenabspritzeinrichtung, dadurch gekennzeichnet, daß die Anschlagleisten (34, 35 ; 42, 43) in niedergeschwenkter Stellung in einem für eine Durchfahrt der Abspritzeinrichtung (17) ausreichenden Abstand von den Filterplatten (8) liegen und daß der Rahmen der Abspritzeinrichtung mit Anschlägen (39) zur Verhinderung der Pendelbewegung einer abzuspritzenden Platte versehen ist.

10. Plattenfilterpresse nach Anspruch 9, dadurch gekennzeichnet, daß die Anschlagleisten (42, 43) über die Zugstreben (5) hinaus zu Abdeckplatten (44, 45) für eine Bunkeröffnung (46) verlängert sind, welche in der liegenden Stellung sich überlappen und in der Arbeitsstellung nach oben hin nach Art von Trichterwänden divergieren.

11. Plattenfilterpresse nach Anspruch 10, dadurch gekennzeichnet, daß die überlappte Abdeckplatte (44) an ihrem unteren Rand mit einer Wasserableitrinne (47) versehen ist.

**Claims**

1. Plate filter press with filter plates suspended on support guides, which filter plates are guided along stop rails for the purpose of preventing pendulating oscillations, characterized in that the stop rails (23, 24 ; 34, 35 ; 42, 43) can be adjusted away from the filter plates (8).

2. Plate filter press according to claim 1, characterized in that the stop rails (23, 24 ; 34, 35 ; 42, 43) are pivotable about axles (30, 31 ; tie rods 5) extending in parallel to the longitudinal axis of the filter press.

3. Plate filter press according to claims 1 and 2, characterized in that each stop rail is subdivided into independently pivotable sections.

4. Plate filter press according to one of claims 1, 2, or 3, characterized in that the stop rails (23, 24) are supported at the upper support guides (3, 4) and can be adjusted so that they contact the upper narrow side (9) or the narrow outer sides of the filter plates (8).

5. Plate filter press according to claim 4, characterized in that the support guides (3, 4) are equipped with downwardly oriented bearing plates and the stop rails (23, 24) are equipped with upwardly oriented bearing plates (26, 27, 28, 29), which are articulated to each other by a pivot-bearing axle (30, 31) and can be arrested in the operative position and/or in the retracted position by means of pins (33) insertable in detent bores (32).

6. Plate filter press according to one of claims 1-3, characterized in that the stop rails (34, 35 ; 42, 43) are arranged at the lower corner zones of the filter plates (8).

7. Plate filter press according to claim 6, characterized in that the stop rails (34, 35 ; 42, 43) are pivotably supported on lower tie rods (5) of the filter press.

8. Plate filter press according to claim 7, characterized in that the stop rails (34, 35 ; 42, 43) consist of a plate having an L-profile, bearing bushes (36) being arranged in the angular space of this plate and surrounding the tie rods (5), which stop rails can be brought into contact with the narrow outer sides of the filter plates (8) with their longer leg (38), reinforced by ribs (37).

9. Plate filter press according to one of claims 6, 7, or 8, with a frame-like plate spray-washing device movable over the filter plate pack, characterized in that the stop rails (34, 35 ; 42, 43) lie, in the downwardly swung position, at a spacing from the filter plates (8) sufficient for the passage of the spray-washing device (17) ; and that the frame of the spray-washing device is provided with abutments (39) to prevent the pendulating motion of a plate to be spray-washed.

10. Plate filter press according to claim 9, characterized in that the stop rails (42, 43) are extended past the tie rods (5) as cover plates (44, 45) for a bin opening (46), these cover plates, in the reclining position, overlapping each other and, in the operative position, diverging upwardly in the manner of funnel walls.

11. Plate filter press according to claim 10, characterized in that the overlapped cover plate (44) is equipped with a water drainage channel (47) at its lower rim.

**Revendications**

1. Filtre-presse à plaques filtrantes suspendues à des supports de guidage et guidées le long de baguettes de butée en vue d'empêcher les mouvements pendulaires, caractérisé par le fait que les baguettes de butée (23, 24 ; 34, 35 ; 42, 43) sont écartables des plaques filtrantes (8).

2. Filtre-presse selon la revendication 1, caractérisé par le fait que les baguettes de butée (23, 24 ; 34, 35 ; 42, 43) sont montées pivotantes autour d'axes (30, 31 ; tirants 5).

3. Filtre-presse selon les revendications 1 et 2, caractérisé par le fait que chaque baguette de butée est divisée en sections montées chacune pivotantes.

4. Filtre-presse selon l'une des revendications 1, 2 ou 3, caractérisé par le fait que les baguettes de butée (23, 24) sont montées sur les supports de guidage supérieurs (3, 4) et sont réglables par rapport à la face supérieure (9) ou par rapport à la petite face externe des plaques de filtrage (8).

5. Filtre-presse selon la revendication 4, caractérisé par le fait que les supports de guidage (3, 4) et les baguettes de butée (23, 24) sont munis de plaques de montage (26, 27, 28, 29) qui sont dirigées vers le bas par rapport aux premiers et vers le haut par rapport aux secondes, ces plaques de montage étant reliées pivotantes l'une à l'autre par un axe de pivotement (30, 31) et blocables en position de travail ou en position rétractée par des boulons (33) enfichables dans des trous de blocage (32).

6. Filtre-presse selon l'une des revendications 1 à 3, caractérisé par le fait que les baguettes de butée (34, 35 ; 42, 43) sont disposées dans la zone des coins inférieurs des plaques de filtrage (8).

7. Filtre-presse selon la revendication 6, caractérisé par le fait que les baguettes de butée (34, 35 ; 42, 43) sont montées pivotantes sur des tirants inférieurs (5) du filtre-presse.

8. Filtre-presse selon la revendication 7, caractérisé par le fait que les baguettes de butée (34, 35 ; 42, 43) sont constituées par des tôles profilées en L dans l'espace angulaire desquelles sont fixés des coussinets (36) entourant les tirants (5) et qui, par leur aile longue (38) renforcée par des nervures (37), sont réglables par rapport à la face externe étroite des plaques filtrantes (8).

9. Filtre-presse selon l'une des revendications 6, 7 ou 8, à dispositif d'arrosage des plaques en forme de portique déplaçable au-dessus du paquet de plaques filtrantes, caractérisé par le fait que les baguettes de butée (34, 35 ; 42, 43), en position abaissée après pivotement, se trouvent à une distance des plaques filtrantes (8) suffisantes pour le passage du dispositif d'arrosage (17) et que le portique du dispositif d'arrosage est muni de butées (39) destinées à empêcher le mouvement pendulaire d'une plaque à arroser.

10. Filtre-presse selon la revendication 9, caractérisé par le fait que les baguettes de butée (42, 43) se prolongent, au-delà des tirants (5) par des plaques de recouvrement (44, 45) pour une ouverture de trémie (46), plaques qui, en position horizontale, se recouvrent et qui, en position de travail, divergent vers le haut selon le type de parois de trémie.

11. Filtre-presse selon la revendication 10, caractérisé par le fait que la plaque de recouvrement recouverte (44) est munie, sur son bord inférieur, d'une goulotte (47) de décharge d'eau.

Fig.1

*Fig.2*

*Fig.3*

Fig 4

17

8

38

37 34 36 47 5

41

0 034 262

3

0 034 262

Fig. 5

Fig. 6

4

_Fig.7_

8

17

42

43

45

47

44

5

36

46

41

_Fig.8_

8

43

42

45

44